(19) **Europäisches Patentamt**

**European Patent Office**

**Office européen des brevets**

(11) **EP 0 690 436 B1**

(12) **EUROPÄISCHE PATENTSCHRIFT**

(45) Veröffentlichungstag und Bekanntmachung des Hinweises auf die Patenterteilung:
**31.10.2001 Patentblatt 2001/44**

(51) Int Cl.⁷: **G10L 15/04**

(21) Anmeldenummer: **95108570.3**

(22) Anmeldetag: **03.06.1995**

(54) **Start-/Endpunkt-Detektion zur Worterkennung**

Detection of the start/end of words for word recognition

Détection de début et de la fin des mots pour la reconnaissence de mots

(84) Benannte Vertragsstaaten:
**AT BE CH DE ES FR GB IT LI NL SE**

(30) Priorität: **28.06.1994 DE 4422545**

(43) Veröffentlichungstag der Anmeldung:
**03.01.1996 Patentblatt 1996/01**

(73) Patentinhaber: **ALCATEL**
**75008 Paris (FR)**

(72) Erfinder:
• **Hörmann, Thomas**
**D-71723 Grossbottwar (DE)**
• **Rozinaj, Gregor, Dr.**
**D-70191 Stuttgart (DE)**

(74) Vertreter: **Knecht, Ulrich Karl, Dipl.-Ing. et al**
**Alcatel**
**Intellectual Property Department, Stuttgart**
**70430 Stuttgart (DE)**

(56) Entgegenhaltungen:
**DE-A- 3 422 877     US-A- 4 410 763**

• **W. REICH: "ADAPTIVE SYSTEME ZUR REDUKTION VON UMGEBUNGSGERÄUSCHEN BEI SPRACHÜBERTRAGUNG" 11.Februar 1985 , UNIVERSITÄT FREDERICIANA, FAKULTÄT FÜR ELEKTROTECHNIK , KARLSRUHE XP002037317 * Seite 82, Absatz 5.3 - Seite 87 ***
• **SHINICHI SATO ET AL: "DEVELOPMENT OF THE SPEAKER-DEPENDENT VOICE ACTIVATED DIALING EQUIPMENT" TELECOMMUNICATIONS FREEDOM - TECHNOLOGY ON THE MOVE, PHILADELPHIA, 15 - 17 JUNE, 1988, Nr. CONF. 38, 15.Juni 1988, INSTITUTE OF ELECTRICAL AND ELECTRONICS ENGINEERS, Seiten 548-554, XP000093946**

**Beschreibung**

Die Erfindung betrifft ein Verfahren zur Erkennung von sowohl Sprache als auch Sprachpausen für die Spracherkennung. Im speziellen betrifft die Erfindung die Detektion von Startpunkten und Endpunkten von Worten bei der Spracherkennung.

Die Detektion von Startpunkten und Endpunkten von Worten ist für die Spracherkennung und für eine hohe Erkennungsrate ein wesentliches, zu lösendes Problem. Grundlegend erfolgt eine Start-/Endpunkt-Detektion so, daß in einem vorgegebenen Zeitintervall die Energie berechnet wird. Liegt die berechnete Energie oberhalb einer ebenfalls festgelegten Schwelle, liegt Sprache, also ein Wort vor. Ist die Energie unterhalb einer Schwelle, liegt eine Sprachpause vor. Mittels diesem Energievergleich kann also angegeben werden, wo sich ein Wortanfang und ein Wortende befindet.

Diese Verfahren arbeiten aber nur solange zuverlässig, als daß keine oder nur sehr gleichmäßig auftretende Geräusche als Hintergrundgeräusche auftreten. Falls sehr gleichmäßig auftretende Geräusche auftreten, muß die Schwelle aber einstellbar sein. Bei gleichmäßig lauten Hintergrundgeräuschen wird die Schwelle erhöht, damit Sprachpausen nicht als Sprache erkannt werden.

Hierbei treten aber für genau den Fall Probleme auf, bei dem das Signal/Rauschverhältnis sehr klein ist, weil für diesen Fall der energetische Unterschied zwischen Sprache und Pause nur sehr gering ist. Aufgrund dieser Probleme wurden "Adaptive Systeme zur Reduktion von Umgebungsgeräuschen bei Sprachübertragung" entwickelt, die unter Verwendung weiterer Merkmale, wie z.B. der Nulldurchgangsrate, eine bessere Sprach/Pausen-Detektion durchführen (aus: "Adaptive Systeme zur Reduktion von Umgebungsgeräuschen bei Sprachübertragung" Dissertation von Werner Reich, Universität Fredericana Karlsruhe, Februar 1985, S. 76-95).

Desweiteren ist in dem Stand der Technik ebenfalls erläutert, sowohl die mittlere Leistung, als auch die Nulldurchgangsrate zur Bildung der Merkmalsvektoren heranzuziehen, danach eine Merkmalsstatistik durchzuführen, und diese mit einem Schwellwert zu vergleichen (Abschlußbericht zum Verbundforschungsvorhaben, "Erkennung und Verarbeitung von gesprochener Sprache mit einfacher Syntax und Semantik für Informationsund Leitsysteme", Kapitel 2.2 Pausendetektor; Universität Fredericana Karlsruhe, 24.11.1989).

Diese beiden letztgenannten Methoden sind in ihrer Ausführung sehr rechenintensiv.

Aus dem Artikel "Developement of the Speaker-Independent Voice Activated Dialing Equipment" von S. Sato et al, IEEE Nr. Conf. 38, 15.06.1988, Seiten 548-554, ist ein Verfahren zur Detektion von Sprachpausen bekannt, bei dem als Entscheidungsmerkmale die Signalenergie und ein Vektor aus LPC-Ceptral-Koeffizienten verwendet werden. Aus diesen Merkmalen wird die Mahalonobis-Distanz zwischen dem aktuellen Vektor und einem mittleren Pausenvektor bestimmt und mit einem Schwellenwert verglichen.

Es ist Aufgabe der Erfindung ein Verfahren zur Start-/Endpunkt-Detektion vorzusehen, daß die Startund Endpunkte von Worten detektiert, unabhängig von den Umgebungsgeräuschen.

Die Aufgabe wird erfindungsgemäß gelöst durch die Lehre des Anspruchs 1.

Ein Vorteil der Erfindung liegt darin, daß bei häufig wechselnden Umgebungsgeräuschen, aber auch bei ständig gleichen Umgebungsgeräuschen, bei denen das Signal/Rauschverhältnis sehr klein ist, dennoch eine exakte Detektion der Start-/Endpunkte stattfindet, was für eine hohe Erkennungsrate von Worten notwendig ist.

Ein weiterer Vorteil ist, daß das erfindungsgemäße Verfahren weniger rechenaufwendig ist, als bisher übliche Verfahren und daß der benötigte Speicherplatz sich signifikant verringert.

Weitere vorteilhafte Ausgestaltungen sind den Unteransprüchen zu entnehmen.

Vorteilhaft ist, daß bei einem schlechten Signal/Rauschverhältnis, durch eine höhere Bewertung des zweiten Merkmals eine noch bessere Start-/Endpunkt-Detektion erfolgt, sodaß die Erkennungsrate sich noch mehr erhöht.

Im folgenden wird die Erfindung anhand von Ausführungsbeispielen mittels Figuren näher erläutert.

Die einzige Figur zeigt ein Blockschaltbild eines erfindungsgemäßen Verfahrens.

Im folgenden wird das Verfahren anhand eines Ausführungsbeispiels näher erläutert.

In dem hier vorliegenden Ausführungsbeispiel wird ein Eingangssignal in Blöcke von beispielsweise 20 ms Länge unterteilt. Innerhalb eines Blocks werden beispielsweise $L = 160$ Abtastwerte bestimmt. Für jeden Block werden vorzugsweise $K = 10$ LPC (Linear-Predictive-Coding)-Cepstrum-Koeffizienten errechnet. Hierbei soll der Wert $K = 10$ keineswegs eine Beschränkung darstellen, denn ein Wert größer oder kleiner als 10 ist ebenfalls wählbar. Im folgenden werden die LPC-Cepstrum-Koeffizienten mit $CEP(k,i)$ bezeichnet, wobei $k = 0, 1...K-1$ ist, und $i$ die fortlaufende Anzahl eines Blocks bezeichnet.

Zur Start-/Endpunkt-Detektion zur Worterkennung wird ein aktueller Merkmalsvektor aus mindestens zwei Merkmalen gebildet. Ein erstes aktuelles Merkmal ist eine Funktion der Signalenergie und bestimmt sich zu

$$MV(i) = \frac{1}{L} \sum_{n=0}^{L-1} |PCM(i, n)| , \qquad (27)$$

wobei PCM(n) Puls-Code-modulierte Daten des Eingangssignales sind.

Beide Merkmale, sowohl MV(m) als auch die LPC-Cepstrum-Koeffizienten CEP (k, i) sind für den Fall, daß der vorliegende Block eine Sprachpause enthält, einander sehr ähnlich. Die beiden Merkmale sollten aber, damit das mindestens eine weitere Merkmal eine Verbesserung der Start-/Endpunkt-Detektion mit sich bringt, somit also auch zu einer höheren Worterkennungsrate führt, einen signifikanten Unterschied darstellen. Dazu dient folgende Vorgehensweise.

Für den ersten Block mit der Ordnungszahl i = 0 werden die Werte CEPs (k,0) und MVs (0) bestimmt. Der Wert CEPs (k,i) für den nächsten Block berechnet sich dann zu:

$$CEPs (k, i) = \frac{3}{4} CEPs (k, i-1) + \frac{1}{4} CEPs (k, i). \qquad (28)$$

Für jeden aktuellen Block i ergibt sich die cepstrale Differenz zu

$$CD(i) = \sum_{K=0}^{k-1} [CEP(k,i) - CEPs(k,i)]^2. \qquad (29)$$

In einem Speicher werden N = 16 cepstrale Differenzen der letzten zurückliegenden Blöcke gespeichert. Ebenfalls werden in diesem Speicher die letzten N = 16 Energiewerte MV(i) gespeichert.

Zur Initialisierung des Start-/Endprodukt-Detektors werden also N = 16 Blöcke benötigt. Für jeden folgenden aktuellen Block ist das System in der Lage eine Start-/Endpunkt-Detektion durchzuführen.

Eine mittlere cepstrale Distanz CD(i) wird über alle N = 16 cepstralen Distanzen gemittelt

$$CD_L(i) = \frac{1}{N} \sum_{n=0}^{N-1} CD(i-n) \qquad (30)$$

Daraus ergibt sich die Verteilung $\Delta CD(i)$ der letzten N = 16 cepstralen Distanzen CD(i) zu:

$$\Delta CD(i) = \frac{1}{N-1} \sum_{n=0}^{N-1} [CD(i-n) - CD_L(i)]^2. \qquad (31)$$

Die Energiedifferenz ergibt sich zu

$$\Delta MV(i) = \frac{1}{N-1} \sum_{n=0}^{N-1} [MV(i-n) - MV_L(i)]^2 \qquad (32)$$

woraus sich ebenfalls eine mittlere Energiedifferenz, gebildet über die letzten $N = 16$ Blöcke, folgendermaßen ergibt.

$$MV_L(i) = \frac{1}{N} \sum_{n=0}^{N-1} MV(i-n) \qquad (33)$$

Daraus ergibt sich folgendes Resultat.

Für ein fast gleichbleibendes Signal, sind die Verteilungsfunktionen $\Delta MV(i)$ und $\Delta CD(i)$ sehr klein, insbesondere für den Fall daß eine Sprachpause auftritt. Für Sprache werden die Verteilungsfunktionen einen größeren Wert ergeben. Daraus ergibt sich die Bildung einer Maximumfunktion

$$DMAX(i) = \max \{\Delta CD(i), \Delta MV(i)\}. \qquad (34)$$

Folgende Fallunterscheidung kann vorgenommen werden:

Für den Fall, daß $DMAX(i)$ größer als ein bestimmter Wert ist, ist das detektierte Signal Sprache. Unterhalb des Wertes ist das detektierte Signal eine Sprachpause.

Bei Verwendung dieser Methode zeigt sich, daß auch beim Auftreten von unterschiedlichen lauten und wechselnden Hintergrundgeräuschen, sich beide Verteilungswerte zwar erhöhen, sich aber bald wieder auf einen niedrigeren Wert einpendeln.

Im folgenden wird anhand der Figur ein Verfahren zur Start-/Endpunkt-Detektion zur Worterkennung eingehend erläutert.

In einem ersten Schritt 1 werden die Daten der Eingangssignale eingelesen. In diesem Fall können dies beispielsweise LPC-Cepstrum Koeffizienten sein und eine mittlere Signalenergie eines aktuellen Blocks. In einem zweiten Schritt 2 wird sowohl eine Verteilung der LPC-Cepstrum Koeffizienten berechnet, als auch eine Verteilung der Signalenergie, jeweils für die letzten 16 Blöcke berechnet. Desweiteren wird eine Maximumfunktion DMAX gebildet, die sich aus dem Maximum der LPC-Cepstrum Verteilungsfunktion und der mittleren Signalenergieverteilungsfunktion zusammensetzt. In einem folgenden ersten Entscheidungsglied E1 wird festgestellt, ob der aktuelle Block einer der ersten 16 Blöcke ist. Für den Fall einer positiven Entscheidung, also ja, wird in einem dritten Schritt 3 festgelegt, daß der letzte Block eine Sprachpause darstellt. Für den Fall einer negativen Entscheidung, also nein, wird in einem zweiten Entscheidungsglied E2 festgestellt, ob der vorangegangene Block Sprache war. Für den Fall, daß in dem letzten Block Sprache vorlag, wird in einem dritten Entscheidungsglied E3 festgestellt, ob die Sprache länger als 2 Sekunden andauert. Für den Fall einer positiven Entscheidung wird in einem vierten Schritt 4 ein Zähler, der die Anzahl der detektierten Endpunkte aufaddiert, zurückgesetzt. Ebenso wird ein Zähler, der die Anzahl der detektierten Startpunkte aufaddiert, zurückgesetzt. Ebenso wird ein Zähler der die Wortlänge angibt zurückgesetzt. Die darauffolgende Entscheidung ist, daß der aktuelle Block eine Sprachpause darstellt.

Für den Fall einer negativen Entscheidung des dritten Entscheidungsgliedes E3, wird in einem vierten Entscheidungsglied E4 festgestellt, ob die Maximumfunktion DMAX kleiner als eine Schwelle ist. Für den Fall, daß die Maximumfunktion DMAX nicht kleiner als eine Schwelle ist, liegt in dem aktuellen Block Sprache vor. Zuvor wird aber in einem weiteren Schritt 4' der Zähler der die Startpunkte aufaddiert, zurückgesetzt. Ebenso wird der Zähler der die Endpunkte aufaddiert zurückgesetzt. Die Wortlänge aber wird um die Länge des aktuellen Blockes erhöht. Für den Fall das die Maximumfunktion DMAX kleiner als die Schwelle ist, die Entscheidung also ja lautet, wird in einem fünften Schritt 5 der Zähler der die Endpunkte addiert um eins erhöht. In einem weiteren fünften Entscheidungsglied E5 wird festgestellt, ob die aktuelle Zeit der Sprachpause größer als die Zahl der gezählten Endpunkte ist, wobei hierbei die Anzahl der gezählten Endpunkte eine, während einer Sprachpause verstrichenen Zeit repräsentiert. Für den Fall einer negativen Entscheidung wird mit dem zuvor beschriebenen vierten Schritt 4 fortgefahren und die Entscheidung lautet, daß sich in dem Block eine Sprachpause ist. Für den Fall einer positiven Entscheidung des fünften Entscheidungsgliedes E5 wird festgestellt, daß in dem aktuellen Block Sprache befindet.

Ausgehend von dem zweiten Entscheidungsglied E2, indem festgestellt wurde, ob der vorangegangene Block Sprache war, wird für den Fall einer negativen Entscheidung, eine weitere Entscheidung in einem sechsten Entscheidungsglied E6 herbeigeführt. In dem sechsten Entscheidungsglied E6 wird festgestellt, ob die Maximumfunktion DMAX größer als eine Schwelle ist. Für den negativen Fall, also nein, wird in einem sechsten Schritt 6 sowohl der Zähler der die Startpunkte, als auch der Zähler der die Endpunkte aufaddiert, zurückgesetzt. Im weiteren wird festgestellt, daß sich in diesem aktuellen Block eine Sprachpause befindet.

Für den positiven Fall, also ja, wird in einem siebten Schritt 7 der Zähler der die Startpunkte zählt um eins erhöht. In einem darauffolgenden siebten Entscheidungsglied E7 wird festgestellt, ob die Zeit des aktuellen Wortes, also der Sprache, größer als die Anzahl der gezählten Startpunkte ist. Für ein positives Resultat wird festgestellt, daß eine Sprachpause vorliegt.

Für ein negatives Resultat wird in einem achten Schritt 8 fortgefahren, der dem vierten Schritt 4 entspricht und alle Zähler zurücksetzt. Die darauffolgende Entscheidung besagt, daß in dem aktuellen Block Sprache vorliegt.

Im folgenden wird auf spezielle Ausgestaltungen der Erfindung näher eingegangen.

Im Bezug auf das Verfahren läßt sich anmerken, daß bei einer Berechnung der Verteilungsfunktionen eine hohe Genauigkeit der Resultate gewährleistet sein muß. Speziell wenn die Werte sehr klein sind, muß eine hohe Genauigkeit bis auf mehrere Stellen hinter dem Komma gegeben sein. Um diese Empfindlichkeit aber zu verringern, kann vorzugsweise ein Logarithmus zur Basis 2 der Verteilungsfunktionen gebildet werden.

Hierbei wird eine Funktion gemäß:

$$\Delta LCD(i) = \log_2(\Delta CD(i) \tag{35}$$

und eine Funktion gemäß

$$\Delta LED(i) = \log_2(\Delta ED(m)) \tag{36}$$

gebildet. Bemerkt werden soll hier, daß $\Delta LCD(i)$ und $\Delta LED$ aus einem Interval (0,31) bestimmt werden.

Zur Bestimmung ob Sprache oder ob eine Sprachpause vorliegt, wird eine Maximumfunktion gemäß

$$\Delta DMAX(i) = \max \{\Delta LCD(i), \Delta LED(i)\} \tag{37}$$

berechnet. Danach wird ein Vergleich mit einer Schwelle durchgeführt, aufgrund derer eine Fallunterscheidung vorgenommen wird.

Für den Fall, daß

$$\Delta DMAX(i) < \text{Schwelle}$$

ist, folgt:

daß in dem Block eine Sprachpause vorliegt.

Für den Fall, daß

$$\Delta DMAX(i) > \text{Schwelle}$$

ist, folgt:
daß in dem Block Sprache vorliegt.

Für den Fall, daß

$$\Delta DMAX(i) = \text{Schwelle}$$

ist, folgt:
daß in dem Block entweder Sprache oder eine Sprachpause vorliegt, entsprechend dem, was bisher in dem Block detektiert worden ist.

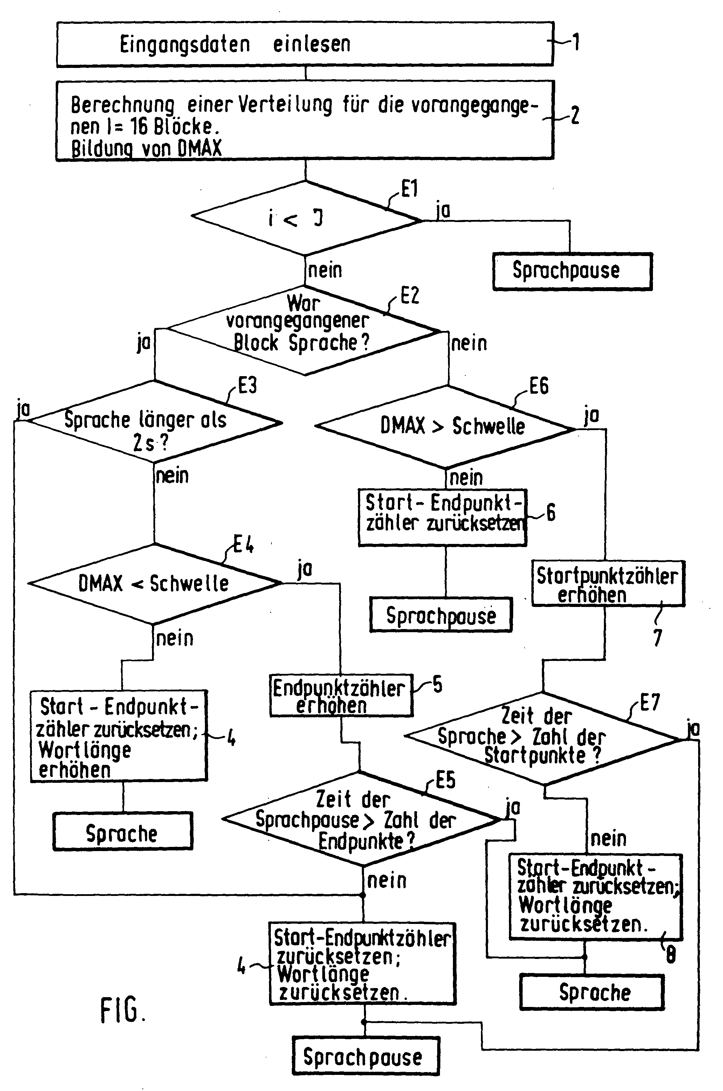

Diese Fallunterscheidung gilt nicht ausschließlich, insbesondere weil einige Hinweise auf eine gegenteilige Entscheidung gegeben sein können (siehe Beschreibung zu Figur 2). Hierbei soll noch bemerkt werden, daß die Schwelle konstant bleibt, und unabhängig von der Lautstärke der Hintergrundgeräusche ist. Demnach ist eine Adaptation für ein Verfahren gemäß Patentanspruch 6 bis 8 nicht nötig. Besonders geeignet ist dieses Verfahren auch für Spracherkennung z.B. in einem fahrenden PKW, usw.

Bei allen vorab erläuterten Verfahren gilt, daß es sich um Echtzeit-Implementierungen handelt.

**Patentansprüche**

1. Verfahren zur Start-/Endpunkt-Detektion zur Erkennung von Worten in einem Sprachsignal,

   - bei dem eine blockweise Unterteilung des Sprachsignales vorgenommen wird, und
   - bei dem ein aktueller Merkmalsvektor aus mindestens zwei aktuellen Merkmalen gebildet wird, von denen ein erstes aktuelles Merkmal eine Funktion der Signalenergie ist, und bei dem das mindestens eine weitere aktuelle Merkmal eine Funktion der LPC (Linear-Predictive-Coding)-Cepstrum-Koeffizienten ist,

   **dadurch gekennzeichnet,daß**

   - mittels der Funktionen der aktuellen Merkmale Verteilungsfunktionen errechnet werden, und
   - eine Maximumfunktion DMAX der Verteilungsfunktionen ein Maß dafür ist, ob zwischen den detektierten Start-/Endpunkten eine Sprachpause oder Sprache auftritt.

2. Verfahren nach Anspruch 1, bei dem das erste aktuelle Merkmal eine Funktion der Signalenergie ist, mit

$$MV(i) = \frac{1}{L} \sum_{n=0}^{L-1} |PCM(i,n)| \quad ,$$

und das mindestens eine weitere Merkmal eine Funktion der LPC-Cepstrum Koeffizienten entsprechend

$$CD(i) = \sum_{k=0}^{K-1} [CEP(k, i) - CEPs(k, i)]^2$$

ist, wobei CEPs(k, i) einem Kurzzeitmittelwert entspricht,

und bei dem Verteilungsfunktionen

$$\Delta CD\,(i) = \frac{1}{N-1} \sum_{n=0}^{N-1} [CD(i-n)-CD_L(i)]^2$$

und

$$\Delta MV\,(i) = \frac{1}{N-1} \sum_{n=0}^{N-1} [MV(i-n)-MV_L(i)]^2$$

$$\text{mit } CD_L(i) = \frac{1}{N} \sum_{n=0}^{N-1} CD(i-n)$$

$$MV_L(i) = \frac{1}{N} \sum_{n=0}^{N-1} MV(i-n)$$

zur Bestimmung der Maximumfunktion

$$DMAX(i) = \max\{\Delta CD(i),\ \Delta MV(i)\}$$

verwendet werden.

3.  Verfahren nach Anspruch 1 oder 2, bei dem logarithmische Verteilungsfunktionen $\Delta LCD$ und $\Delta LMV$ entsprechend:

$$\Delta LCD(i) = \log_2(\Delta CD(i))$$

und

$$\Delta LMV(i) = \log_2(\Delta MV(i))$$

zu einer Bestimmung einer Maximumfunktion ΔDMAX verwendet werden, entsprechend

$$\Delta DMAX(i) = \max\{\Delta LCD(i), \Delta LMV(i)\},$$

um festzustellen, ob eine Sprachpause oder ob Sprache vorliegt.

**Claims**

1. Process for start/end point detection for recognising words in a speech signal,

   - in which the speech signal is divided into blocks, and
   - in which a current feature vector is formed from at least two current features, of which a first current feature is a function of the signal energy, and in which the at least one further current feature is a function of the LPC (Linear Predictive Coding) cepstrum coefficient,

   **characterised in that**

   - distribution functions are calculated by means of the functions of the actual features, and
   - a maximum function DMAX of the distribution function is a measure of whether a non-speech interval or speech occurs between the detected start and end points.

2. Process according to Claim 1, in which the first current feature is a function of the signal energy, where

$$MV(i) = \frac{1}{L}\sum_{n=O}^{L-1}|PCM(i,n)|$$

and the at least one further feature is a function of the LPC cepstrum coefficients:

$$CD(i) = \sum_{k=0}^{K-1}[CEP(k,i)-CEPs(k,i)^2,$$

where CEPs(k, i) is a short-time average and distribution functions

$$\Delta CD(i) = \frac{1}{N-1}\sum_{n=0}^{N-1}[CD(i-n)-CD_L(i)]^2$$

and

$$\Delta MV(i) = \frac{1}{N-1}\sum_{n=0}^{N-1}[MV(i-n)-MV_L(i)]^2$$

with

$$CD_L(i) = \frac{1}{N} \sum_{n=0}^{N-1} CD(i-n)$$

$$MV_L(i) = \frac{1}{N} \sum_{n=0}^{N-1} MV(i-n)$$

are used to determine the maximum function

$$DMAX(i) = \max \{\Delta CD(i), \Delta MV(i) \}.$$

**3.** Process according to Claim 1 or 2, in which the logarithmic distribution functions $\Delta LCD$ and $\Delta LMV$ given by:

$$\Delta LCD(i) = \log_2 (\Delta CD(i))$$

and

$$\Delta LMV(i) = \log_2 (\Delta MV(i))$$

are used to determine a maximum function $\Delta DMAX$ defined as

$$\Delta DMAX(i) = \max \{\Delta LCD(i), \Delta LMV(i) \},$$

in order to determine whether a non-speech interval or speech is present.

**Revendications**

**1.** Procédé de détection de début et de fin pour la reconnaissance de mots dans un signal vocal,

- dans lequel une subdivision par bloc du signal vocal est effectuée, et
- dans lequel un vecteur caractéristique actuel est composé à partir d'au moins deux caractéristiques actuelles dont une première caractéristique actuelle est une fonction de l'énergie de signal, et dans lequel ladite au moins une autre caractéristique actuelle est une fonction des coefficients cepstraux LPC (Linear Predictive Coding),

   **caractérisé en ce que**

- au moyen des fonctions des caractéristiques actuelles, des fonctions de distribution sont calculées, et
- une fonction maximale DMAX des fonctions de distribution est une mesure pour savoir si un silence ou de la parole apparaît entre les débuts et fins détectés.

**2.** Procédé selon la revendication 1, dans lequel la première caractéristique actuelle est une fonction de l'énergie de signal, avec

$$MV(i) = \frac{1}{L} \sum_{n=0}^{L-1} \left| PCM(i, n) \right| ,$$

et ladite au moins une autre caractéristique est une fonction des coefficients cepstraux LPC selon

$$CD(i) = \sum_{k=0}^{K-1} \left[ CEP(k, i) - CEPs(k, i) \right]^2 ,$$

où CEPs(k,i) correspond à une moyenne instantanée, et dans lequel des fonctions de distribution

$$\Delta CD(i) = \frac{1}{N-1} \sum_{n=0}^{N-1} \left[ CD(i - n) - CD_L(i) \right]^2$$

et

$$\Delta MV(i) = \frac{1}{N-1} \sum_{n=0}^{N-1} \left[ MV(i - n) - MV_L(i) \right]^2$$

avec

$$CD_L(i) = \frac{1}{N} \sum_{n=0}^{N-1} CD(i - n)$$

$$MV_L(i) = \frac{1}{N} \sum_{n=0}^{N-1} MV(i - n)$$

sont utilisées pour déterminer la fonction maximale

$$DMAX(i) = \max\{\Delta CD(i), \Delta MV(i)\}.$$

**3.** Procédé selon la revendication 1 ou 2, dans lequel des fonctions de distribution logarithmiques ΔLCD et ΔLMV selon :

$$\Delta LCD(i) = \log_2(\Delta CD(i))$$

et

$$\Delta LMV(i) = \log_2(\Delta MVCD(i))$$

sont utilisées pour déterminer une fonction maximale ΔDMAX selon

$$\Delta DMAX(i) = \max\{\Delta LCD(i), \Delta LMV(i)\}$$

pour déterminer si l'on est en présence d'un silence ou de la parole.

Eingangsdaten einlesen — 1

Berechnung einer Verteilung für die vorangegange- — 2
nen I= 16 Blöcke.
Bildung von DMAX

E1
i < J    ja

nein                    Sprachpause

E2
War
vorangegangener
Block Sprache?

ja                              nein

E3                                      E6
Sprache länger als              DMAX > Schwelle        ja
2s?

ja                                              nein

nein                        Start-Endpunkt-    — 6
                            zähler zurücksetzen

E4                                              Startpunktzähler
DMAX < Schwelle    ja                           erhöhen

                            Sprachpause              — 7

nein

Start-Endpunkt-        Endpunktzähler  — 5
zähler zurücksetzen;   erhöhen
Wortlänge          — 4                    E7
erhöhen                            Zeit der
                                   Sprache > Zahl der      ja
                                   Startpunkte?

Sprache

                                                      nein
                    E5
           Zeit der                        Start-Endpunkt-
           Sprachpause > Zahl der   ja     zähler zurücksetzen;
           Endpunkte?                      Wortlänge
                                           zurücksetzen.
                                                              — 8
                    nein

FIG.                                       Sprache

        Start-Endpunktzähler
   4 —  zurücksetzen;
        Wortlänge
        zurücksetzen.

                Sprachpause